(19) Europäisches Patentamt / European Patent Office / Office européen des brevets

(11) **EP 3 489 033 B1**

(12) **EUROPEAN PATENT SPECIFICATION**

(45) Date of publication and mention
of the grant of the patent:
**05.08.2020 Bulletin 2020/32**

(51) Int Cl.:
**B60C 1/00** *(2006.01)*          **C08K 3/04** *(2006.01)*
**C08K 5/00** *(2006.01)*          **C08L 9/06** *(2006.01)*

(21) Application number: **17203043.9**

(22) Date of filing: **22.11.2017**

(54) **HIGH PERFORMANCE TIRE**

HOCHLEISTUNGSREIFEN

PNEU À HAUTE PERFORMANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.05.2019 Bulletin 2019/22**

(73) Proprietor: **Sumitomo Rubber Industries, Ltd.
Kobe-shi, Hyogo 651-0072 (JP)**

(72) Inventor: **NAKAJIMA, Hiroki
Kobe-shi, Hyogo 651-0072 (JP)**

(74) Representative: **TBK
Bavariaring 4-6
80336 München (DE)**

(56) References cited:
• **DATABASE WPI Week 200924 Thomson
Scientific, London, GB; AN 2009-G09173
XP002781254, & JP 2009 057413 A (TOYO
RUBBER IND CO LTD) 19 March 2009 (2009-03-19)**
• **DATABASE WPI Week 201530 Thomson
Scientific, London, GB; AN 2015-24444Y
XP002781255, & JP 2015 071708 A (SUMITOMO
RUBBER IND LTD) 16 April 2015 (2015-04-16)**
• **DATABASE WPI Week 201434 Thomson
Scientific, London, GB; AN 2014-F13130
XP002781256, & KR 2014 0030706 A (HANKOOK
TIRE MFG CO LTD) 12 March 2014 (2014-03-12)**
• **DATABASE WPI Week 200334 Thomson
Scientific, London, GB; AN 2003-357635
XP002781257, & JP 2002 293993 A (SUMITOMO
RUBBER IND LTD) 9 October 2002 (2002-10-09)**

EP 3 489 033 B1

**Description**

[Technical Field]

The present invention relates to a high performance tire.

[Technical Background]

For a tread rubber composition of a high performance tire, both high grip performance of initial traveling (initial grip performance) and stable grip performance during traveling are required. In order to ensure these performances, various efforts have been made in the past.

As a method for improving initial grip performance, a method in which an amount of a plasticizer is increased is widely known. On the other hand, as a method for obtaining stable grip performance during traveling, a method of using a high styrene polymer or a high softening point resin is studied in Patent Document 1.

However, when an amount of a plasticizer is increased, although initial grip performance is improved, wear resistance and grip performance during traveling tend to decrease. Further, when a high styrene polymer or a high softening point resin is used, although stable grip performance during traveling can be obtained, initial grip performance and wear resistance tend to decrease. Thus, using the conventional methods, it is difficult to improve initial grip performance, grip performance during traveling and wear resistance in a well-balanced manner.

[Related Art]

[Patent Document]

[Patent Document 1] Japanese Patent Laid-Open Publication No. 2004-137463.

[Summary of the Invention]

[Problems to Be Solved by the Invention]

The present invention is intended to solve the above-described problems and to provide a high performance tire that allows initial grip performance, grip performance during traveling and wear resistance to be improved in a well-balanced manner.

[Means for Solving the Problems]

The present invention relates to a high performance tire that has a tread manufactured using a rubber composition as defined in claims 1 and 2.

[Effect of the Invention]

According to the present invention, the tread is manufactured using the rubber composition as defined in claims 1 and 2. Therefore, a high performance tire that allows initial grip performance, grip performance during traveling, and wear resistance to be improved in a well-balanced manner can be obtained.

[Mode for Carrying Out the Invention]

A high performance tire of the present invention has a tread manufactured using a rubber composition as defined in claims 1 and 2.

By using the rubber composition (tread rubber composition) for a tread, a high performance tire can be realized that allows high grip performance from initial traveling to end of traveling to be achieved while allowing good wear resistance to be ensured, which has been difficult to achieve with a conventional technology.

The tread rubber composition according to the present invention contains styrene butadiene (SBR). For the SBR, for example, an emulsion polymerized styrene butadiene rubber (E-SBR) and a solution polymerized styrene butadiene rubber (S-SBR) can be used, and two or more SBRs may be used in combination.

A styrene content of the SBR is preferably 20 mass% or more, and more preferably 35 mass% or more. When the styrene content is less than 20 mass%, there is a tendency that sufficient grip performance cannot be obtained. Further, the styrene content of the SBR is preferably 60 mass% or less, and more preferably 50 mass% or less. When the styrene content exceeds 60 mass%, there is a tendency that wear resistance decreases and temperature dependency increases and good grip performance on a high temperature road surface cannot be achieved.

The styrene content of the SBR is calculated based on H1-NMR measurement.

A vinyl content in a butadiene component of the SBR is preferably 20 mass% or more, and more preferably 35 mass% or more. When the vinyl content is less than 20 mass%, there is a tendency that sufficient grip performance cannot be obtained. Further, the vinyl content in the butadiene component of the SBR is preferably 60 mass% or less, and more preferably 50 mass% or less. When the vinyl content exceeds 60 mass%, there is a tendency that wear resistance decreases.

The vinyl content in the butadiene component of the SBR is measured using infrared absorption spectroscopy.

A content of the SBR in 100 mass% of the rubber component may be 60 mass% or more. However, from a point of view that the effect of the present invention can be satisfactorily obtained, the content of the SBR is preferably 90 mass% or more, and more preferably 100 mass%.

The tread rubber composition according to the present invention may contain rubber components other than the SBR, such as a natural rubber (NR), an isoprene rubber (IR), a butadiene rubber (BR), a styrene isoprene butadiene rubber (SIBR), an ethylene propylene diene rubber (EPDM), a chloroprene rubber (CR), an acrylonitrile butadiene rubber (NBR), and a butyl rubber (IIR).

The tread rubber composition according to the present invention contains, as a reinforcing filler, the carbon black component that contains the carbon black having a DBP oil absorption of 130 $cm^3$/(100 g) or more and a nitrogen adsorption specific surface area of 100 - 125 $m^2$/g.

The carbon black can be manufactured using a method of Examples to be described later.

The DBP oil absorption (OAN) of the carbon black is 130 $cm^3$/(100 g) or more, and preferably 135 $cm^3$/(100 g) or more. When the DBP oil absorption of the carbon black is less than 130 $cm^3$/(100 g), there is a risk that sufficient wear resistance cannot be obtained. Further, the DBP oil absorption of the carbon black is preferably 200 $cm^3$/(100 g) or less, more preferably 180 $cm^3$/(100 g) or less, and even more preferably 160 $cm^3$/(100 g) or less. When the DBP oil absorption of the carbon black exceeds 200 $cm^3$/(100 g), there is a risk that grip performance may decrease.

The DBP oil absorption of the carbon black is measured according to JIS K 6217-4.

The nitrogen adsorption specific surface area ($N_2$SA) of the carbon black is 100 $m^2$/g or more, and preferably 110 $m^2$/g or more. When the $N_2$SA of the carbon black is less than 100 $m^2$/g, there is a risk that sufficient grip performance cannot be obtained. Further, the $N_2$SA of the carbon black is 125 $m^2$/g or less, and preferably 122 $m^2$/g or less. When the $N_2$SA of the carbon black exceeds 125 $m^2$/g, there is a risk that wear resistance may decrease.

The $N_2$SA of the carbon black is obtained according to JIS K 6217-2.

A content of the carbon black with respect to 100 parts by mass of the rubber component is 100 parts by mass or more, and preferably 120 parts by mass or more. When the content of the carbon black is less than 100 parts by mass, there is a risk that sufficient wear resistance cannot be obtained. Further, the content of the carbon black with respect to 100 parts by mass of the rubber component is 180 parts by mass or less, preferably 170 parts by mass or less, and more preferably 150 parts by mass or less. When the content of the carbon black exceeds 180 parts by mass, there is a risk that sufficient initial grip performance cannot be obtained.

The tread rubber composition according to the present invention may contains, as the carbon black component, a carbon black other than the above-described carbon black.

From a point of view that the effect of the present invention can be satisfactorily obtained, the content of the carbon black component (total content of the above-described carbon black and other carbon blacks) with respect to 100 parts by mass of the rubber component is preferably 100 parts by mass or more, and more preferably 120 parts by mass or more, and preferably 180 parts by mass or less, more preferably 170 parts by mass or less, and even more preferably 150 parts by mass or less.

The tread rubber composition according to the present invention may contain reinforcing fillers other than the carbon black component such as silica, calcium carbonate, alumina, clay, and talc, which are reinforcing fillers commonly used in tire rubber compositions.

The tread rubber composition according to the present invention contains the plasticizer component. As the plasticizer component, a tackifying resin and a liquid diene-based polymer are used.

As the tackifying resin, a resin having a structural unit based on at least one selected from a group consisting of phenol, coumaron, indene, terpene, acrylic acid ester, methacrylic acid ester, styrene, t-butylphenol and acetylene is used. These resins may each be independently used, or two or more of these resins may be used in combination. Among these resins, a resin having a structural unit based on at least one selected from a group consisting of terpene, styrene, t-butylphenol and acetylene is preferable.

Further, specific examples of the resins include a phenol resin, a coumarone-indene resin, a terpene resin, a copolymer of terpene and styrene, an acrylic resin, a methacrylic resin, a copolymer of t-butylphenol and acetylene, and the like. A copolymer of terpene and styrene, and a copolymer of t-butylphenol and acetylene are preferable.

A softening point of the tackifying resin is 110 °C or higher, and preferably 140 °C or higher. When the softening point of the tackifying resin is lower than 100 °C, there is a risk that sufficient grip performance cannot be obtained. Further, the softening point of the tackifying resin is 180 °C or lower, and preferably 170 °C or lower. When the softening point of the tackifying resinexceeds 180 °C, there is a risk that wear resistance may decrease.

The softening point of the tackifying resin is a temperature at which a ball falls in measurement of a softening point defined in JIS K 6220-1 using a ring and ball softening point measuring apparatus.

A content of the tackifying resin with respect to 100 parts by mass of the rubber component is preferably 20 parts by mass or more, and more preferably 30 parts by mass or more. When the content of the tackifying resin is less than 20 parts by mass, there is a risk that sufficient grip performance cannot be obtained. Further, the content of the tackifying resin with respect to 100 parts by mass of the rubber component is preferably 90 parts by mass or less, and more preferably 70 parts by mass or less. When the content of the tackifying resin exceeds 90 parts by mass, there is a risk that sufficient initial grip performance and wear resistance cannot be obtained.

The liquid diene-based polymer is a diene polymer in a liquid state at a normal temperature(25 °C). Examples of the liquid diene-based polymer include a liquid styrene butadiene copolymer (liquid SBR), a liquid butadiene polymer (liquid BR), a liquid isoprene polymer (liquid IR), a liquid styrene isoprene copolymer (liquid SIR), and the like. These liquid diene-based polymers may each be independently used, or two or more of these liquid diene-based polymers may be used in combination. Among these liquid diene-based polymers, from a point of view of grip performance and wear resistance, the liquid SBR is preferable.

A weight-average molecular weight (Mw) of the liquid diene-based polymer based on polystyrene conversion measured using gel permeation chromatography (GPC) is preferably $1.0 \times 10^3$ or more and $2.0 \times 10^5$ or less, and more preferably $3.0 \times 10^3$ or more and $1.5 \times 10^4$ or less. When the weight-average molecular weight (Mw) is less than $1.0 \times 10$ 3, there is a risk that sufficient wear resistance cannot be obtained, and when the weight-average molecular weight (Mw) exceeds $2.0 \times 10$ 5, there is a risk that viscosity of a polymerization solution may become too high and productivity may decrease.

The weight-average molecular weight (Mw) of the liquid diene-based polymer is a polystyrene conversion value measured using gel permeation chromatography (GPC).

A content of the liquid diene-based polymer with respect to 100 parts by mass of the rubber component is preferably 30 parts by mass or more, and more preferably 40 parts by mass or more. When the content of the liquid diene-based polymer is less than 30 parts by mass, there is a risk that sufficient grip performance cannot be obtained. Further, the content of the liquid diene-based polymer with respect to 100 parts by mass of the rubber component is preferably 150 parts by mass or less, more preferably 120 parts by mass or less, and even more preferably 100 parts by mass or less. When the content of the liquid diene-based polymer exceeds 150 parts by mass, there is a risk that sufficient wear resistance cannot be obtained.

The tread rubber composition according to the present invention may contain plasticizer components other than the tackifying resin and the liquid diene-based polymer, such as oil and the like, which are plasticizers (softening agents) commonly used in tire rubber compositions.

As the oil, mineral oil such as aromatic oil, process oil, paraffin oil or the like can be used.

When oil is used as a plasticizer component, from a point of view that the effect of the present invention can be satisfactorily obtained, a content of the oil is preferably 20 parts by mass or more and 100 parts by mass or less, and more preferably 40 parts by mass or more and 80 parts by mass or less.

A content of the plasticizer component with respect to 100 parts by mass of the rubber component is 120 parts by mass or more, and preferably 130 parts by mass or more. When the content of the plasticizer component is less than 120 parts by mass, there is a risk that sufficient grip performance cannot be obtained. Further, the content of the plasticizer component with respect to 100 parts by mass of the rubber component is 250 parts by mass or less, and preferably 200 parts by mass or more. When the content of the plasticizer component exceeds 250 parts by mass, there is a risk that sufficient wear resistance cannot be obtained.

In the tread rubber composition according to the present invention, the content of the carbon black component and the content of the plasticizer component satisfy the following formula (1):

$$\text{(the content of the carbon black component)/(the content of the plasticizer component)} \leqq 0.9$$

$$(1)$$

When (the content of the carbon black component)/(the content of the plasticizer component) exceeds 0.9, there is a risk that sufficient grip performance cannot be obtained. A lower limit of the formula (1) is not particularly limited, but is preferably 0.6.

In the tread rubber composition according to the present invention, in addition to the above-described components, compounding agents commonly used in the tire industry, such as a vulcanization accelerator, a vulcanization agent, zinc oxide, wax, and an anti-aging agent may be appropriately blended.

Examples of vulcanization accelerators include sulfenamide-based, thiazole-based, thiuram-based, guanidine-based, and dithiocarbamate-based vulcanization accelerators and the like. These vulcanization accelerators may each be independently used, or two or more of these vulcanization accelerators may be used in combination. Among these vulcanization accelerators, the sulfenamide-based and dithiocarbamate-based vulcanization accelerators are preferable.

Examples of sulphenamide-based vulcanization accelerators include N-tert-butyl-2-benzothiazolylsulfenamide (NS), N-cyclohexyl-2-benzothiazolylsulfenamide (CZ), N-Oxydiethylene-2-benzothiazolylsulfenamide (MSA), and the like. These sulphenamide-based vulcanization accelerators may each be independently used, or two or more of these sulphenamide-based vulcanization accelerators may be used in combination. Among these sulphenamide-based vulcanization accelerators, NS is preferable.

Examples of dithiocarbamate-based vulcanization accelerators include zinc dibenzyldithiocarbamate (ZTC), zinc dimethyldithiocarbamate (PZ), zinc N-pentamethylenedithiocarbamate (ZP), sodium dibutyldithiocarbamate (TP), and the like. These dithiocarbamate-based vulcanization accelerators may each be independently used, or two or more of these dithiocarbamate-based vulcanization accelerators may be used in combination. Among these dithiocarbamate-based vulcanization accelerators, ZTC is preferable.

A content of the vulcanization accelerator with respect to 100 parts by mass of the rubber component is preferably 1 part by mass or more and 15 parts by mass or less, and more preferably 3 parts by mass or more and 10 parts by mass or less. When the content of the vulcanization accelerator is less than 1 part by mass, there is a tendency that a sufficient vulcanization speed cannot be obtained and good grip performance and wear resistance cannot to be obtained. When the content of the vulcanization accelerator exceeds 15 parts by mass, there is a risk that blooming may occur, and grip performance and wear resistance may decrease.

As a vulcanization agent, sulfur is preferable.

A content of the sulfur with respect to 100 parts by mass of the rubber component is preferably 0.5 parts by mass - 3 parts by mass. When the content of the sulfur is less than 0.5 parts by mass, there is a risk that a good vulcanization reaction cannot be obtained and wear resistance may decrease. When the content of the sulfur exceeds 3 parts by mass, there is a risk that blooming may occur and sufficient grip performance and wear resistance cannot be obtained.

Zinc oxide is not particularly limited, and zinc oxide used in the rubber fields such as tires can be used. Fine particle zinc oxide having an average particle size of 200 nm or less (preferably 100 nm or less) can be suitably used. A lower limit for the average particle size of the fine particle zinc oxide is not particularly limited, but is preferably 20 nm or more, and more preferably 30 nm or more.

The average particle size of the zinc oxide is an average particle size (average primary particle size) converted from a specific surface area measured using a BET method based on nitrogen adsorption.

From a point of view that the effect of the present invention can be satisfactorily obtained, a content of the zinc oxide with respect to 100 parts by mass of the rubber component is preferably 0.5 parts by mass or more and 10 parts by mass or less, and more preferably 1 part by mass or more and 5 parts by mass or less.

The high performance tire of the present invention is manufactured using a usual method using the above-described rubber composition.

That is, the rubber composition containing the above-described components is extruded in accordance with a shape of a tread at an unvulcanized stage, and is molded together with other tire members on a tire molding machine using a usual method. Thereby, an unvulcanized tire is formed. By heating and pressing the unvulcanized tire in a vulcanizer, the high performance tire of the present invention is obtained.

The high performance tire of the present invention can be suitably used as a high performance dry tire.

The term "high performance tire" in the present specification refers to a tire that is particularly excellent in grip performance, and is a concept that also includes a tire for competition to be used in a competition vehicle. Further, in the present specification, the term "dry tire" refers to a tire that is particularly excellent in dry grip performance.

[Examples]

Based on Examples, the present invention is described in detail. However, the present invention is not limited to only these Examples.

In the following, various chemicals used in Examples and Comparative Examples are collectively described.

SBR: Tafuden 4850 (styrene content: 40 mass%; vinyl content in butadiene component: 41 mass%, containing 50 parts by mass of an oil component with respect to 100 parts by mass of a solid rubber component) manufactured by Asahi Kasei Corporation

Carbon black: N220 (OAN: 114 cm$^3$/(100 g); $N_2$SA: 114 m$^2$/g) manufactured by Cabot Japan Co., Ltd.

Prototype carbon black: Manufacturing Example 1 described below

Oil: Diana Process AH-24 manufactured by Idemitsu Kosan Co., Ltd.

Liquid diene-based polymer: L-SBR-820 (liquid SBR; Mw: 10000) manufactured by Kuraray Co., Ltd.
Tackifying resin 1: Koresin (copolymer of p-t-butylphenol and acetylene; softening point: 160 °C) manufactured by BASF
Tackifying resin 2: YS Resin TO125 (copolymer of terpene and styrene; softening point: 125 °C) manufactured by Yasuhara Chemical Co., Ltd.
Wax: Sannock N manufactured by Ouchi Shinko Chemical Industry Co., Ltd.

Anti-aging agent 1: Nocrac 6C manufactured by Ouchi Shinko Chemical Industry Co., Ltd.
Anti-aging agent 2: Nocrac RD manufactured by Ouchi Shinko Chemical Industry Co., Ltd.

Stearic acid: Stearic Acid "Camellia" manufactured by NOF Corporation
Zinc oxide: Jincoc Super F-1 (average particle size: 100 nm) manufactured by Hakusuitech Co., Ltd.
Sulfur: Powdered sulfur manufactured by Tsurumi Chemical Co., Ltd.

Vulcanization accelerator 1: Nocceler NS (N-tert-butyl-2-benzothiazolyl sulfenamide) manufactured by Ouchi Shinko Chemical Industry Co., Ltd.
Vulcanization accelerator 2: Nocceler ZTC (zinc dibenzyldithiocarbamate) manufactured by Ouchi Shinko Chemical Industrial Co., Ltd.

<Manufacturing Example 1>

Prototype carbon black was manufactured based on conditions shown in Table 1 using natural gas as fuel and tall oil as a raw material using carbon black manufacturing equipment in which a combustion zone (having an inner diameter of 500 mm and a length of 1750 mm equipped with an air introduction duct and a combustion burner), a raw material introduction zone (including a narrow diameter part having an inner diameter of 55 mm and a length of 700 mm provided with a raw material nozzle penetrating from surrounding), and a rear reaction zone (having an inner diameter of 200 mm and a length of 2700 mm equipped with a quenching device) are sequentially joined. DBP oil absorption and $N_2SA$ of the obtained prototype carbon black are shown in Table 1.

[Table 1]

| Manufacturing Example | | | 1 |
|---|---|---|---|
| Operation conditions | Combustion air amount | $Nm^3/hr$ | 5000 |
| | Combustion temperature | °C | 600 |
| | Raw material oil amount | kg/hr | 700 |
| Raw material oil blending (parts by mass) | Tall oil | | 100 |
| Characteristics | DBP oil absorption | $cm^3/(100\ g)$ | 140 |
| | $N_2SA$ | $m^2/g$ | 120 |

<Examples, Reference Example and Comparative Examples>

According to formulations shown in Table 2, the materials were kneaded using a 1.7 L Banbury (manufactured by Kobe Steel Co., Ltd.). The obtained unvulcanized rubber composition was confirmed to be free from melt residues of compounding agents based on Mooney viscosity and a cross-sectional state when the unvulcanized rubber composition was formed into a sheet having a width of 20 cm and a thickness of 1 cm. Thereafter, the unvulcanized rubber composition was molded into a tread shape, and was bonded together with other tire members on a tire molding machine, and was vulcanized at 150 °C for 30 minutes, and a test tire (tire size: 215/45R17) was obtained.
The following evaluations were performed with respect to the obtained test tires. Evaluation results are shown in Table 2.

(Initial Grip Performance)

The test tire was mounted on a domestically manufactured FR vehicle having a displacement of 2000 cc, and the vehicle was driven for 10 laps on a test course having a dry asphalt road surface. In this case, a test driver evaluated stability of control during steering in a second lap and the evaluation result was expressed as an index number with Comparative Example 1 as 100 (initial grip performance index number). A larger index number indicates a better initial grip performance on a dry road surface.

Grip Performance during Traveling)

The test tire was mounted on a domestically manufactured FR vehicle having a displacement of 2000 cc, and the vehicle was driven for 10 laps on a test course having a dry asphalt road surface. In this case, the test driver evaluated by comparison the stability of control during steering in a best lap and in a final lap, and the evaluation result was expressed as an index number with Comparative Example 1 as 100 (grip performance index number during traveling). A larger index number indicates a smaller decrease in grip performance during traveling and more stable grip performance during traveling on a dry road surface.

(Wear Resistance)

The test tire was mounted on a domestically manufactured FR vehicle having a displacement of 2000 cc, and the vehicle was driven on a test course having a dry asphalt road surface. In this case, a remaining groove amount of the tread was measured (15 mm when new), and the result was expressed as an index number with a remaining groove amount of Comparative Example 1 as 100 (wear resistance index number). A larger index number indicates a higher wear resistance.

[Table 2]

| | | Comparative Example | | | | | | Example | | | | | Reference Example |
|---|---|---|---|---|---|---|---|---|---|---|---|---|---|
| | | 1 | 2 | 3 | 4 | 5 | 6 | 1 | 2 | 3 | 4 | 5 | 6 |
| Composition (parts by mass) | SBP (oil component: 50 parts by mass) | 150 | 150 | 150 | 150 | 150 | 150 | 150 | 150 | 150 | 150 | 150 | 150 |
| | Carbon black | 120 | 120 | 120 | 120 | 120 | — | — | — | — | — | — | — |
| | Prototype carbon black | — | — | — | — | — | 120 | 120 | 120 | 120 | 120 | 140 | 120 |
| | Oil | 70 | 90 | 50 | — | — | 70 | | — | — | — | — | 90 |
| | Liquid diene-based polymer | — | — | — | 50 | 50 | — | Reference Example | 50 | 70 | 50 | 70 | — |
| | Tackifying resin 1 | — | — | 40 | 40 | 20 | — | 40 | 20 | 20 | 30 | 30 | — |
| | Tackifying resin 2 | — | — | — | — | 20 | — | — | 20 | 20 | 30 | 30 | — |
| | Wax | 2 | 2 | 2 | 2 | 2 | 2 | 2 | 2 | 2 | 2 | 2 | 2 |
| | Anti-aging agent 1 | 1.5 | 1.5 | 1.5 | 1.5 | 1.5 | 1.5 | 1.5 | 1.5 | 1.5 | 1.5 | 1.5 | 1.5 |
| | Anti-aging agent 2 | 2 | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 | 2 | 2 |
| | Zinc oxide | 3 | 3 | 3 | 3 | 3 | 3 | 3 | 3 | 3 | 3 | 3 | 3 |
| | Sulfur | 1.5 | 1.5 | 1.5 | 1.5 | 1.5 | 1.5 | 1.5 | 1.5 | 1.5 | 1.5 | 1.5 | 1.5 |
| | Vulcanization accelerator 1 | 4 | 4 | 4 | 4 | 4 | 4 | 4 | 4 | 4 | 4 | 4 | 4 |
| | Vulcanization accelerator 2 | 1 | 1 | 1 | 1 | 1 | 1 | 1 | 1 | 1 | 1 | 1 | 1 |
| Carbon black content (A) | | 120 | 120 | 120 | 120 | 120 | 120 | 120 | 120 | 120 | 120 | 140 | 120 |
| Plasticizer content (B) | | 120 | 140 | 140 | 140 | 140 | 120 | 140 | 140 | 160 | 160 | 180 | 140 |
| (A)/(B) | | 1 | 0.85 | 0.85 | 0.85 | 0.85 | 1 | 0.85 | 0.85 | 0.75 | 0.75 | 0.78 | 0.85 |
| Evaluation | Initial grip performance index number | 100 | 135 | 110 | 120 | 125 | 100 | 120 | 135 | 163 | 150 | 162 | 115 |
| | Grip performance index number during traveling | 100 | 88 | 130 | 132 | 120 | 80 | 140 | 132 | 133 | 150 | 152 | 120 |
| | Wear resistance index number | 100 | 88 | 60 | 65 | 68 | 140 | 120 | 125 | 115 | 112 | 119 | 130 |

As shown in Table 2, as compared to Comparative Example 1, the initial grip performance, the grip performance during traveling, and the wear resistance are all improved in Examples in which a tread is manufactured using a rubber composition that contains predetermined amounts of a SBR, a carbon black (prototype carbon black) having a DBP oil absorption of 130 cm$^3$/(100 g) or more and a nitrogen adsorption specific surface area of 100 - 125 m$^2$/g, and a plasticizer component, and in which a content of the carbon black component and a content of the plasticizer component satisfy the formula (1).

**Claims**

1. A high performance tire having a tread manufactured using a rubber composition that includes:

   a rubber component containing a styrene butadiene rubber;
   a carbon black component containing a carbon black having a DBP oil absorption being measured according to JIS K 6217-4 of 130 cm$^3$/(100 g) or more and a nitrogen adsorption specific surface area being measured according to JIS K 6217-2 of 100 - 125 m$^2$/g; and
   a plasticizer component, wherein
   in 100 mass% of the rubber component, a content of the styrene butadiene rubber is 60 - 100 mass%,
   with respect to 100 parts by mass of the rubber component, a content of the carbon black is 100 - 180 parts by mass, and a content of the plasticizer component is 120 - 250 parts by mass,
   the content of the carbon black component and the content of the plasticizer component satisfy the following formula (1):

$$\text{(the content of the carbon black component)}/\text{(the content of the plasticizer component)} \leqq 0.9 \ (1),$$

   and
   the plasticizer component includes a liquid diene-based polymer and a tackifying resin having a softening point determined in accordance with JIS K 6220-1 using a ring and ball softening point measuring apparatus of 110 - 180 °C and being a resin having a structural unit based on at least one selected from a group consisting of phenol, coumaron, indene, terpene, acrylic acid ester, methacrylic acid ester, styrene, t-butylphenol, and acetylene.

2. The high performance tire according to claim 1, wherein
   with respect to 100 parts by mass of the rubber component, a content of the tackifying resin is 20 - 90 parts by mass, and a content of the liquid diene-based polymer is 30 - 150 parts by mass.

**Patentansprüche**

1. Hochleistungsreifen mit einem Profil hergestellt unter Verwendung einer Kautschukzusammensetzung, die beinhaltet:

   eine einen Styrol-Butadien-Kautschuk enthaltende Kautschukkomponente;
   eine Carbon Black-Komponente enthaltend ein Carbon Black aufweisend eine DBP-Öl-Absorption gemessen entsprechend JIS K 6217-4 von 130 cm$^3$/(100 g) oder mehr und eine stickstoffadsorptionsspezifische Oberflächenfläche gemessen gemäß JIS K 6217-2 von 100-125 m$^2$/g; und
   eine Weichmacherkomponente, wobei
   in 100 Masse-% der Kautschukkomponente, ein Gehalt des Styrol-Butadien-Kautschuks 60-100 Masse-% ist,
   in Bezug auf 100 Masse-Teile der Kautschukkomponente, ein Gehalt des Carbon Blacks 100-180 Masse-Teile ist und ein Gehalt der Weichmacherkomponente 120-250 Masse-Teile ist,
   der Gehalt der Carbon Black-Komponente und der Gehalt der Weichmacherkomponente die folgende Formel (1) erfüllen:

(der Gehalt der Carbon Black-Komponente)/(der Gehalt der Weichmacherkomponente) ≤ 0,9 (1),

und

die Weichmacherkomponente beinhaltet ein Polymer auf Flüssig-Dien-Basis und ein Klebrigmacher-Harz aufweisend einen Erweichungspunkt bestimmt gemäß JIS K 6220-1 unter Verwendung eines Ring- und Ball-Erweichungspunktmessgeräts von 110-180°C und ist ein Harz aufweisend eine strukturelle Einheit basierend auf zumindest einem ausgewählt aus der Gruppe bestehend aus Phenol, Coumaron, Inden, Terpen, Acrylsäureester, Methacrylsäureester, Styrol, t-Butylphenol und Acetylen.

2. Hochleistungsreifen nach Anspruch 1, wobei
in Bezug auf 100 Masse-Teile der Kautschukkomponente, ein Gehalt des Klebrigmacher-Harzes 20-90 Masse-Teile ist und ein Gehalt des Polymers auf Flüssig-Dien-Basis 30-150 Masse-Teile ist.

**Revendications**

1. Pneu haute performance ayant une bande de roulement fabriquée par utilisation d'une composition de caoutchouc qui comprend :

un composant caoutchouc contenant un caoutchouc de styrène-butadiène ;
un composant noir de carbone contenant un noir de carbone ayant une absorption d'huile DBP, mesurée conformément à la norme JIS K 6217-4, de 130 cm$^3$/ (100 g) ou plus et une surface spécifique par adsorption d'azote, mesurée conformément à la norme JIS K 6217-2, de 100 à 125 m$^2$/g ; et
un composant plastifiant,
dans lequel
dans 100 % en masse du composant caoutchouc, la teneur en le caoutchouc de styrène-butadiène est de 60 à 100 % en masse,
pour 100 parties en masse du composant caoutchouc, la teneur en le noir de carbone est de 100 à 180 parties en masse, et la teneur en le composant plastifiant est de 120 à 250 parties en masse,
la teneur en le composant noir de carbone et la teneur en le composant plastifiant satisfont à la formule (1) suivante :

$$\text{(teneur en le composant noir de carbone)} / \text{(teneur en le composant plastifiant)} \leqq 0,9 \ (1),$$

et

le composant plastifiant comprend un polymère à base de diène liquide et une résine donnant du collant ayant un point de ramollissement, déterminé conformément à la norme JIS K 6220-1 utilisant un dispositif de mesure de point de ramollissement à bille et anneau, de 110 à 180°C, et qui est une résine ayant un motif structurel à base d'au moins l'un choisi dans l'ensemble constitué par le phénol, la coumarone, l'indène, le terpène, un ester d'acide acrylique, un ester d'acide méthacrylique, le styrène, le t-butylphénol, et l'acétylène.

2. Pneu haute performance selon la revendication 1, dans lequel, pour 100 parties en masse du composant caoutchouc, la teneur en la résine donnant du collant est de 20 à 90 parties en masse, et la teneur en le polymère à base de diène liquide est de 30 à 150 parties en masse.

**EP 3 489 033 B1**

**REFERENCES CITED IN THE DESCRIPTION**

**Patent documents cited in the description**

- JP 2004137463 A